# EUROPÄISCHE PATENTSCHRIFT

(11) **EP 3 495 671 B1**
(45) Veröffentlichungstag und Bekanntmachung des Hinweises auf die Patenterteilung: **11.03.2020**
(21) Anmeldenummer: 17205594.9
(22) Anmeldetag: 06.12.2017
(51) Int. Cl.: F16B 37/04, B29C 70/86, F16B 35/06

(54) **ANSCHLUSSELEMENT FÜR EIN FASERVERBUNDKUNSTSTOFFBAUTEIL**
CONNECTION ELEMENT FOR A FIBRE COMPOUND PLASTIC MATERIAL
ÉLÉMENT DE RACCORDEMENT POUR UN COMPOSANT EN MATIÈRE PLASTIQUE À BASE DE COMPOSITE RENFORCÉ PAR DES FIBRES

(43) Veröffentlichungstag der Anmeldung: 12.06.2019
(73) Patentinhaber: Koninklijke Nedschroef Holding B.V., 5707 LC Helmond (NL)
(72) Erfinder: Ulrikkeholm, Torben, 5550 Langeskov (DK); Blomenkamp, Dirk, 33106 Paderborn (DE)
(74) Vertreter: Patentanwälte Dörner & Kötter PartG mbB

(56) Entgegenhaltungen:
- EP-A1- 1 048 442
- WO-A1-90/15708
- WO-A1-2014/116151
- WO-A1-2015/015224
- DE-A1- 3 718 676
- DE-A1- 19 608 127
- DE-A1- 19 834 772
- DE-A1-102004 062 895
- DE-A1-102013 220 718
- US-A1- 2017 335 875

## Beschreibung

Die Erfindung betrifft ein Faserverbundkunststoffbauteil mit einem Anschlusselement nach dem Patentanspruch 1 sowie ein Distanzelement zur Verbindung mehrerer beabstandet übereinanderliegend angeordneter Anschlusselemente nach dem Patentanspruch 8. Die Erfindung betrifft darüber hinaus ein Verfahren zur Herstellung eines Faserverbundkunststoffbauteils unter Einsatz eines solchen Anschlusselements nach dem Patentanspruch 11.

Zur Herstellung von Bauteilen aus faserverstärkten Kunststoffen, insbesondere aus carbonfaserverstärkten Kunststoffen (CFK-Bauteile), werden Verstärkungsfasern, beispielsweise Polyacrylnitril-Fasern verdreht und zu Gewebematten mit unterschiedlichen Gelegen mit Lagen in verschiedenen Faserrichtungen weiterverarbeitet. Diese Fasermatten werden in eine Kunststoffmatrix eingebettet und nachfolgend ausgehärtet. Für die Kunststoffmatrix kommen bevorzugt Epoxidharze zum Einsatz, da sie eine sehr gute Haftung an den Fasern und somit eine gute Belastungverteilung zwischen den Fasern gewährleisten. Die Fasergewebe werden nach Tränken mit einem Matrixharz entweder durch Handlaminieren, d.h. Positionieren der harzgetränkten Fasermatten auf einer Form mit nachfolgendem Aushärten, oder auch im Nasspressverfahren durch Aushärten in einer druckbeaufschlagten Form verarbeitet. Bei größeren Stückzahlen erfolgt die Herstellung regelmäßig mittels des Resin Transfer Molding (RTM)-Verfahrens, bei dem zugeschnittene Fasermatten in eine geschlossene Form gebracht werden, die zunächst evakuiert, dann mit flüssigem Harz befüllt und nachfolgend ausgehärtet wird. Zur Herstellung hochwertiger Bauteile werden auch Vorimprägnierte Fasermatten, so genannte Prepreg-Matten eingesetzt. Diese regelmäßig als Rollenmaterial mit Epoxidharz vorgetränkten Matten können direkt in die für das herzustellende Bauteil erforderliche Form zugeschnitten werden, bis zur gewünschten Bauteildicke übereinander positioniert und dann unter Pressdruck und Temperatur ausgehärtet werden. Bauteile aus faserverstärkten Kunststoffen, insbesondere CFK-Bauteile, weisen neben außergewöhnlichen mechanischen Eigenschaften wie Zugfestigkeit, Elastizität und Steifigkeit eine hohe Korrosionsbeständigkeit und eine sehr niedrige Wärmedehnung bei einer äußerst geringen Dichte auf, weshalb dieser Werkstoff in der Luft- und Raumfahrttechnik sowie im Automobilbau zunehmend an Bedeutung gewinnt.

Zur Verbindung von CFK-Bauteilen mit weiteren Bauteilen werden diese oftmals zur Durchführung von Schrauben oder Nieten mit Löchern versehen, welche entweder durch Stanzen oder durch Bohren eingebracht werden. Hierdurch wird an dem CFK-Bauteil an der Lochungsstelle eine Schwächung erzeugt, wodurch die Gefahr eines Versagens der Schraub- oder Nietverbindung durch Bruch oder Ausreißen an der Lochung besteht. Aufgrund der Matrixdominanz der Faserverbundstoffe bei Druckbelastung ist die Lochleibungsfestigkeit eines Faserverbundes sehr gering. Die Kunststoffmatrix hat die Aufgabe, die Fasern zu stützen und die Kräfte in die Fasern, zwischen den Fasern und von Schicht zu Schicht zu leiten. Durch Druckbelastung steigen die Spannungen senkrecht zur Faser und die Schubspannungen an. Aufgrund der geringen Festigkeiten in diesen Richtungen kommt es zu einem frühen Versagen der Matrix, bzw. der Faser-Matrixanbindung. Faserverbundkunststoffbauteile und Verfahren zu deren Herstellung sind in der WO 2015/015224 A1 sowie der DE 10 2013 220718 A1 beschrieben.

Hier will die Erfindung Abhilfe schaffen. Der Erfindung liegt die Aufgabe zugrunde, ein Faserverbundkunststoffbauteil, umfassend eine in eine Kunststoffmatrix eingebettete Fasermattenanordnung bereitzustellen, bei der eine zuverlässige Niet-, Schrauben- oder Bolzenverbindung mit weiteren Bauteilen, insbesondere CFK-Bauteilen ermöglicht ist. Gemäß der Erfindung wird diese Aufgabe durch ein Faserverbundkunststoffbauteil mit den Merkmalen des kennzeichnenden Teils des Patentanspruchs 1 gelöst.

Mit der Erfindung ist ein Faserverbundkunststoffbauteil, umfassend eine in eine Kunststoffmatrix eingebettete Fasermattenanordnung, bereitgestellt, die eine zuverlässige Niet-, Schrauben-, oder Bolzenverbindung mit weiteren Bauteilen, insbesondere von CFK-Bauteilen ermöglicht.

Gemäß der Erfindung wird diese Aufgabe durch die Merkmale des kennzeichnenden Teils des Patentanspruchs 1 gelöst. Es ist wenigstens ein Anschlusselement angeordnet, dessen Faserfäden in wenigstens einer Fasermatte oder auch zwischen zwei Fasermatten angeordnet sind. Dabei ist der Verbindungsbereich des wenigstens einen Anschlusselements bevorzugt nicht in die Kunststoffmatrix eingebettet. Hierdurch ist nach dem Aushärten des Faserverbundkunststoffbauteils durch das integrierte Anschlusselement eine Niet-, Schrauben- oder auch Bolzenverbindung ohne Beeinträchtigung des Faserverbundkunststoffbauteils ermöglicht.

Dadurch, dass eine Scheibe angeordnet ist, in deren Außenrandbereich Verstärkungsfasern oder -bündel, insbesondere Carbonfasern oder Carbonfaserbündel angeordnet sind, die sich in Form von überstehenden Faserfäden nach außen erstrecken, ist eine Integration dieser Scheibe durch Einbringung dieser Fahrerfäden in den Fasergewebematten-Kunststoffmatrixverbund ermöglicht. Nach Aushärten des Bauteils ist das Anschlusselement über die Faserfäden dann in dieses Bauteil integriert. Eine Manipulation dieses Anschlusselements, beispielsweise durch Einbringen einer Bohrung mit anschließender Durchführung eines Bolzens oder eines Niets bewirkt so keine unmittelbare Schwächung des CFK-Werkstoffs, wodurch eine hohe Lochleibungsfestigkeit ermöglicht ist. Bevorzugt ist die Scheibe eine Metallscheibe.

In Weiterbildung der Erfindung sind die Fasern und/oder Faserbündel durch in die Scheibe eingebrachte Löcher geführt, die bevorzugt umlaufend beabstandet zum Scheibenaußenrand angeordnet sind. Hierdurch ist eine zuverlässige Verbindung der Fasern bzw. der Faserbündel mit der Scheibe ermöglicht.

In Ausgestaltung der Erfindung weist der Verbindungsbereich der Scheibe eine Bohrung zur Durchführung eines Bolzens oder eines Niets auf. Der Verbindungsbereich kann auch direkt mit einem Verbindungsteil, beispielsweise in Form eines Bolzens, eines Gewindebolzens oder auch eines Nietstücks oder eine Mutter ausgebildet sein.

Wenigstens zwei Fasermatten sind beabstandet übereinander angeordnet in eine Kunststoffmatrix eingebettet, welche Fasermatten jeweils wenigstens ein Anschlusselement aufweisen, dessen Verbindungsbereich eine Bohrung aufweist, wobei die Bohrungen wenigstens eines Anschlusselements wenigstens zweier Fasermatten zueinander fluchtend angeordnet sind und wobei ein Distanzelement derart durch die fluchtend zueinander angeordneten Bohrungen der Anschlusselemente der Fasermatten geführt ist, dass die Anschlusselemente einer jeden Fasermatte beabstandet zueinander auf der Außenmantelfläche des Distanzelements aufliegt. Hierdurch ist bei einem in Sandwichbauweise aufgebauten Faserverbundkunststoffbauteil eine Integration mehrerer Anschlusselemente in einzelne Lagen des Bauteilaufbaus ermöglicht, wodurch die Krafteinleitung über die einzelnen Anschlusselemente direkt in die unterschiedlichen Ebenen erzielt ist. Durch die Durchführung des Distanzelements ist eine gleichmäßige Krafteinleitung in die einzelnen Einschlusselemente erzielt.

Bevorzugt ist die Mantelfläche des Distanzelements zumindest bereichsweise konisch und/oder abgestuft ausgebildet. Hierdurch ist eine beabstandete Anordnung der einzelnen Anschlusselemente ermöglicht. Dabei kann das Distanzelement hülsenförmig ausgebildet sein. Hierdurch ist die Durchführung eines Bolzens oder auch einer Schraube durch das Distanzelement zur Verbindung des Faserverbundkunststoffbauteils mit einem weiteren Bauteil ermöglicht.

In einer weiteren Ausbildung der Erfindung ist an dem Distanzelement ein Verbindungsteil, insbesondere in Form einer Mutter oder eines Bolzens, bevorzugt eines Gewindebolzens angeordnet. Hierdurch ist eine Funktion des Distanzelements als Verbindungsteil mit gleichmäßiger Krafteinleitung in die einzelnen Ebenen des Faserverbundkunstoffbauteils über die auf dem Distanzelement angeordneten Anschlusselemente erzielt.

Gegenstand der vorliegenden Erfindung ist weiterhin ein Distanzelement zur Verbindung mehrerer beabstandet übereinanderliegend angeordneter, wenigstens ein mit einer Bohrung versehenes Anschlusselement aufweisender Fasermatten zur Herstellung eines Faserverbundkunststoffteils, insbesondere eines CFK-Bauteils, wobei das Distanzelement einen Auffädelabschnitt zur Aufnahme von wenigstens zwei eine Bohrung aufweisenden Anschlusselementen aufweist, welcher Auffädelabschnitt entlang seines Längsmittelachsenverlaufs einen abnehmenden Durchmesser aufweist. Hierbei ist der abnehmende Durchmesser zumindest bereichsweise stufenweise sich verjüngend ausgebildet.

In Weiterbildung der Erfindung ist an das Distanzelement ein Verbindungsteil, insbesondere in Form einer Mutter oder eines Bolzens, bevorzugt eines Gewindebolzens ausgebildet. Hierdurch ist das Distanzelement zugleich als Verbindungsmittel zur Verbindung eines Faserverbundkunststoffbauteils mit einem weiteren Bauteil einsetzbar.

In Ausgestaltung der Erfindung schließt sich an den abgestuften Auffädelabschnitt eine Scheibe an, die vorzugsweise mit Verstärkungsfasern oder Verstärkungsfaserbündeln, insbesondere Carbonfasern oder Carbonfaserbündeln versehen ist, die sich in Form von überstehenden Faserfäden nach außen erstrecken. Hierdurch ist eine Integration des Distanzelements über die Scheibe in eine Fasergewebemattenanordnung ermöglicht, wobei auf dem Distanzelement in weitere Lagen des Faserverbundkunststoffbauteilaufbaus integrierte Anschlusselemente beabstandet zueinander angeordnet werden können.

Der vorliegenden Erfindung liegt weiterhin die Aufgabe zugrunde, ein Verfahren zur Herstellung eines Faserverbundkunststoff-Bauteils bereitzustellen, das eine zuverlässige Niet-Schrauben oder Bolzenverbindung des hergestellten Bauteils mit weiteren Bauteilen ermöglicht. Gemäß der Erfindung wird diese Aufgabe durch ein Verfahren mit den Merkmalen des Patentanspruchs 11 gelöst.

Dadurch, dass zunächst die Faserfäden wenigstens eines Anschlusselements in eine Fasermatte eingewebt oder auch zwischen zwei Fasermatten platziert werden und anschließend die wenigstens eine Fasermatten mit den Faserfäden des wenigstens einen Anschlusselements in eine Kunststoffmatrix eingebettet wird, ist nach anschließendem Aushärten der in der Kunststoffmatrix eingebetteten Anordnung eine zuverlässige Verbindung durch das Anschlusselement ohne übermäßige Beanspruchung des CFK-Werkstoffs ermöglicht. Unter die Einbettung der Fasermatten in eine Kunststoffmatrix ist auch die Positionierung der Faserfäden zwischen zwei Prepreg-Matten zu subsummieren. Auch hier ergänzen sich die Harze in denen die Matten getränkt sind zu einer Kunststoffmatrix.

Bevorzugt wird der Verbindungsbereich des wenigstens einen Anschlusselements nicht in die Kunststoffmatrix eingebettet. Hierdurch ist einer Übertragung von Bearbeitungsbeanspruchungen des Anschlusselements, beispielsweise durch Einbringen einer Bohrung oder Einstanzen eines Loches auf das umgebende CFK-Material, vermieden.

In wenigstens zwei Fasermatten werden jeweils die Faserfäden wenigstens eines Anschlusselements eingewebt oder zwischen wenigstens zwei Fasermattenpaare werden die Faserfäden wenigstens eines Anschlusselements platziert, wobei der Verbindungsbereich der wenigstens zwei Anschlusselemente eine Bohrung aufweist, nachfolgend werden die Fasermatten bzw. die Fasermattenpaare derart übereinanderliegend angeordnet, dass die Bohrungen der Anschlusselemente zueinander fluchten, wonach ein Distanzelement durch die jeweils fluchtend zueinander angeordneten Bohrungen der Anschlusselemente geführt wird, wonach die so gebildete Anordnung in eine Kunststoffmatrix eingebildet wird. (Auch hier gilt das zuvor zur Bildung einer Kunststoffmatrix durch Aufschichten von Prepreg-Matten Angeführte.) Hierdurch ist eine über mehrere Lagen eines sandwichartig aufgebauten Faserverbundkunststoffbauteils positionierte Einbringung von Anschlusselementen und deren Kopplung über das Distanzelement bewirkt, welches auf das Distanzelement einwirkende Kräfte gleichmäßig in die verschiedenen Lagen des Faserverbundkunststoff-Bauteils einleitet. Durch diese gleichmäßige Krafteinleitung ist einer Überbeanspruchung des Faserverbundkunststoffbauteils an der Verbindungsstelle entgegengewirkt.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die schematische Darstellung eines Anschlusselements;
- Figur 2: die schematische Darstellung eines Anschlusselements in einer weiteren Ausführungsform;
- Figur 3: die schematische Darstellung eines Anschlusselements in einer dritten Ausführungsform;
- Figur 4: die schematische Darstellung eines Distanzelements mit angeordnetem Anschlusselement nach Figur 1;
- Figur 5: die schematische Darstellung einer Carbonfasermatte mit integriertem Anschlusselement gemäß Figur 1 im Querschnitt und
- Figur 6: die schematische Darstellung eines CFK-Bauteils mit integriertem Distanzelement und Anschlusselementen.

Das als Ausführungsbeispiel gewählte Anschlusselement 1 ist im Wesentlichen gebildet aus einer Scheibe 2 mit einem Außenrandbereich 21, in dem umlaufend beabstandet zum Scheibenaußenrand Löcher 22 eingebracht sind, die einen Verbindungsbereich 23 begrenzen. Die Scheibe 2 ist im Ausführungsbeispiel als Metallscheibe ausgebildet und mit Carbonfaserfäden 3 versehen, die durch die umlaufend angeordneten Löcher 22 geführt mit der Scheibe 2 verbunden sind. Die Carbonfaserfäden sind im Ausführungsbeispiel mit einem Epoxidharz getränkt.

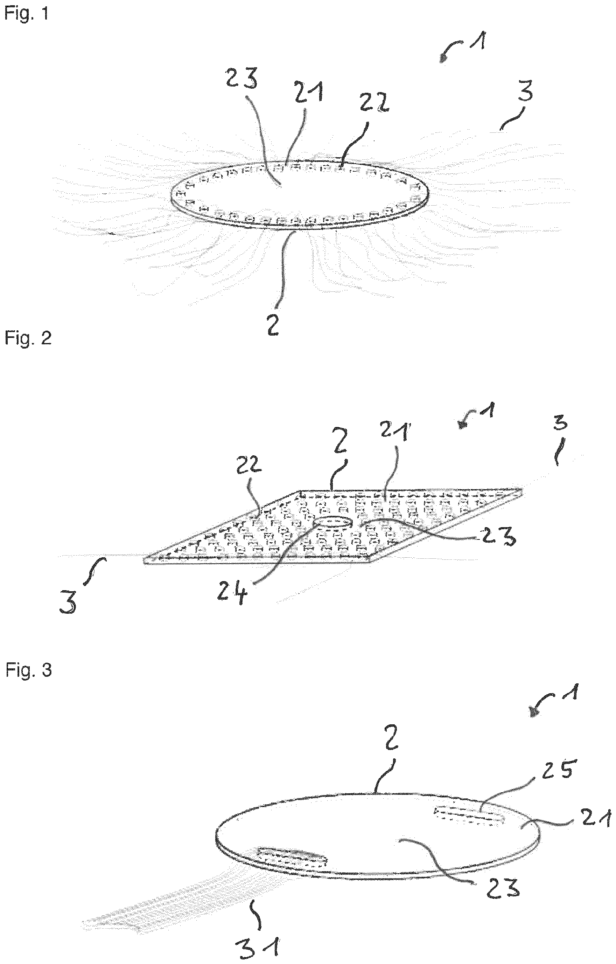

In Figur 2 ist ein Anschlusselement 1 in einer weiteren Ausführungsform dargestellt. Hierbei ist die Scheibe 2 rechteckig ausgebildet und aus Aluminium hergestellt. Der Außenrandbereich 21 dieser Scheibe 2 erstreckt sich bis nahe an das Zentrum der Scheibe 2 und ist in Art einer flächigen Perforation mit Löchern 22 versehen, welche einen inneren Verbindungsbereich 23 begrenzen. In den Verbindungsbereich 23 ist hier eine Bohrung 24 zur Durchführung eines Befestigungsbolzens oder -niets eingebracht. Durch die perforationsartig in die Scheibe 2 eingebrachten Löcher sind Carbonfaserfäden 3 hindurchgeführt, die sich als überstehende Faserfäden nach außen erstrecken. Die Scheibe 2 ist auf diese Weise quasi in ein Carbonfaserfadengeflecht "eingewebt".

Im Ausführungsbeispiel gemäß Figur 3 besteht das Anschlusselement 1 aus einer kreisrunden Scheibe 2, in deren Außenrandbereich 21 gegenüberliegend Langlöcher 25 eingebracht sind. Durch die Langlöcher 25 sind Carbonfaserbündel 31 geführt, die mit der Scheibe 2 verbunden sind. In Figur 3 sind lediglich zwei mit Carbonfaserbündeln 31 durchzogene Langlöcher 25 in der Scheibe 2 eingebracht. Selbstverständlich können in der Scheibe 2 auch mehrere mit Carbonbaserbündeln 31 durchzogene Langlöcher 25 angeordnet sein. Es ist weiterhin auch möglich, sowohl mit Carbonfaserfäden 3 durchzogene Löcher 22, als auch mit Carbonbaserbündeln 31 durchzogene Langlöcher 25 anzuordnen. Auch hier begrenzen die mit den Carbonfaserbündeln 31 durchzogenen Langlöcher 5 einen inneren Verbindungsbereich 23.

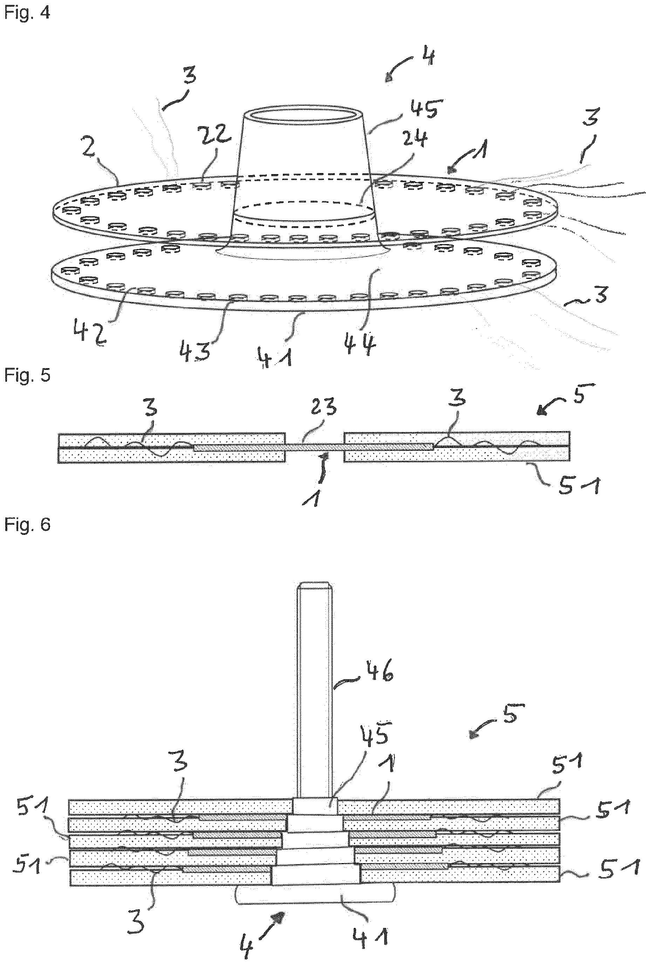

In Figur 4 ist ein Distanzelement 4 dargestellt. Das Distanzelement 4 besteht im Wesentlichen aus einer kreisrunden Scheibe 41, an die in ihrem inneren Verbindungsbereich 44 zentrisch ein hülsenförmig ausgebildetes Konusstück 45 angeformt ist. In dem Außenrandbereich 42 der Scheibe 41 sind umlaufend Löcher 43 eingebracht, die mit Carbonfaserfäden 3 durchzogen sind, die mit der Scheibe 41 verbunden sind. Auf das hülsenförmige Konusstück 45 des Distanzelements 4, dessen konisch nach außen zulaufende Mantelfläche einen Auffädelabschnitt ausbildet, ist beispielhaft ein Anschlusselement 1 gemäß Figur 1 aufgebracht, das hierzu zentrisch mit einer Bohrung 24 versehen wurde, mit der es auf das Konusstück 45 des Distanzelements 4 aufgefädelt ist. Wie aus Figur 4 ersichtlich, lassen sich so mehrere Anschlusselemente 1, die mit zentrischen Bohrungen 24 mit unterschiedlichem Durchmesser versehen sind, beabstandet zueinander auf das Konusstück 45 auffädeln.

In Figur 5 ist schematisch die Fasermattenanordnung 51 eines CFK-Bauteils 5 gezeigt, in die ein Anschlusselement 1 integriert ist. Hierbei wurden zwischen aufeinander mit unterschiedlichen Faserrichtungen in einer Kunststoffmatrix platzierten Fasermatten die Carbonfäden 3 des Anschlusselements 1 angeordnet, wonach diese Anordnung ausgehärtet wurde. Dabei ist der Verbindungsbereich 23 der Scheibe 2 des Anschlusselements 1 nicht in die Kunststoffmatrix eingebettet.

Im Ausführungsbeispiel gemäß Figur 6 ist ein CFK-Bauteil in Sandwichbauweise dargestellt. Hierbei wurden mehrere jeweils mit einem Anschlusselement 1 gemäß Figur 5 versehene Fasermattenanordnungen 51 erstellt und auf ein Distanzelement 4 aufgefädelt, wobei die Verbindungsbereiche 23 der Anschlusselemente 1 der einzelnen Fasermattenanordnungen 51 jeweils mit einer zentrischen Bohrung 24 versehen wurden, deren Durchmesser zueinander jeweils verjüngt ausgebildet ist. Auf diese Weise sind die einzelnen Anschlusselemente 1 der Fasermattenanordnungen 51 beabstandet zueinander auf dem stufig ausgebildeten Konusstück 45 des Distanzelements 4 platziert. Das Distanzelement 4 weist dabei endseitig eine Scheibe 41 auf, auf der die unterste Fasermattenanordnung 51 aufliegt. Das Konusstück 45 des Distanzelements 4 ist in diesem Ausführungsbeispiel massiv ausgebildet und an seinem der Scheibe 41 gegenüberliegenden Ende mit einem Gewindebolzen 46 versehen, der an das Konusstück 45 angeformt ist. Nach anschließender Aushärtung des so gebildeten CFK-Bauteils kann dieses einfach über den Gewindebolzen 46 mit einem weiteren Bauteil verbunden werden.

In einer weiteren - nicht dargestellten - Ausführungsform sind an der Scheibe 41 des Distanzelementes 4 Carbonfasern 3 angeordnet, die zunächst zwischen die Prepreg-Fasermatten einer ersten Fasermattenanordnung 51 angeordnet wurden, wodurch das Distanzelement 4 in diese erste Fasermattenanordnung 51 integriert ist. Das Konusstück 45 des Distanzelements 4 ragt so wiederum aus der ersten Fasermattenanordnung 51 hervor. Auf den stufig ausgebildeten Konus 45 des Distanzelements 4 wurden nachfolgend wiederum mehrere jeweils mit einem Anschlusselement 1 gemäß Figur 5 versehene Fasermattenanordnungen 51 mit ihren Bohrungen 24 unterschiedlichen Durchmessers aufgefädelt, wodurch diese beabstandet zueinander auf dem Konusstück 45 des Distanzelements 4 angeordnet sind.

## Patentansprüche

1. Faserverbundkunststoffbauteil, umfassend eine in eine Kunststoffmatrix eingebettete Fasermattenanordnung (51), wobei wenigstens ein Anschlusselement (1) angeordnet ist, das eine Scheibe mit einem Außenrandbereich umfasst, der einen inneren Verbindungsbereich begrenzt, wobei der Außenrandbereich (21) mit Verstärkungsfasern versehen ist, die sich in Form von überstehenden Faserfäden (3) oder Faserfadenbündeln (31) nach außen erstrecken und dessen Faserfäden (3) in wenigstens einer Fasermatte und/oder zwischen zwei Fasermatten angeordnet sind, **dadurch gekennzeichnet, dass** wenigstens zwei Fasermatten, in die wenigstens ein Anschlusselement (1), das eine Scheibe mit einem Außenrandbereich umfasst, der einen inneren Verbindungsbereich begrenzt, wobei der Außenrandbereich (21) mit Verstärkungsfasern versehen ist, die sich in Form von überstehenden Faserfäden (3) oder Faserfadenbündeln (31) nach außen erstrecken, eingebracht ist, beabstandet und/oder zwei Fasermattenanordnungen (51) übereinander angeordnet in eine Kunststoffmatrix eingebettet sind, welche Fasermatten bzw. Fasermattenanordnungen (51) jeweils wenigstens ein Anschlusselement (1) aufweisen, dessen Verbindungsbereich eine Bohrung aufweist, wobei die Bohrungen (24) wenigstens eines Anschlusselements (1) wenigstens zweier Fasermatten bzw. Fasermattenanordnungen (51) zueinander fluchtend angeordnet sind, und wobei ein Distanzelement (4) derart durch die fluchtend zueinander angeordneten Bohrungen (24) der Anschlusselemente (1) der Fasermatten bzw. der Fasermattenanordnungen (51) geführt ist, dass die Anschlusselemente (1) einer jeden Fasermatte bzw. Fasermattenanordnung (51) beabstandet zueinander auf der Außenmantelfläche des Distanzelements (4) aufliegt, wobei die Mantelfläche des Distanzelements (4) bevorzugt zumindest bereichsweise konisch und/oder abgestuft ausgebildet ist.

2. Faserverbundkunststoffbauteil nach Anspruch 1, **dadurch gekennzeichnet, dass** die Scheibe (2) eine Metallscheibe ist.

3. Faserverbundkunststoffbauteil nach Anspruch 1 oder 2, **dadurch gekennzeichnet, dass** die Faserfäden (3) und/oder Faserfadenbündel (31) durch in die Scheibe (2) eingebrachte Löcher (22) geführt sind, die bevorzugt umlaufend beabstandet zum Scheibenaußenrand angeordnet sind.

4. Faserverbundkunststoffbauteil nach einem der vorgenannten Ansprüche, **dadurch gekennzeichnet, dass** der Verbindungsbereich (23) der Scheibe (2) eine Bohrung (24) oder ein Verbindungsteil aufweist, das bevorzugt in Form eines Bolzens, einer Mutter oder eines Nietstücks ausgebildet ist.

5. Faserverbundkunststoffbauteil nach einem der vorgenannten Ansprüche, **dadurch gekennzeichnet, dass** die Fasermatten als Prepreg-Fasermatten ausgebildet sind.

6. Faserverbundkunststoffbauteil nach einem der vorgenannten Ansprüche, **dadurch gekennzeichnet, dass** der Verbindungsbereich (23) des wenigstens einen Anschlusselements (1) nicht in die Kunststoffmatrix eingebettet ist.

7. Faserverbundkunststoffbauteil nach einem der vorgenannten Ansprüche, **dadurch gekennzeichnet, dass** das Distanzelement (4) hülsenförmig ausgebildet ist und/oder dass an dem Distanzelement (4) ein Verbindungsteil, insbesondere in Form einer Mutter oder eines Bolzens, bevorzugt eines Gewindebolzens (46) angeordnet ist.

8. Distanzelement zur Verbindung mehrerer beabstandet übereinanderliegend angeordneter, wenigstens ein mit einer Bohrung (24) versehenes Anschlusselement (1) aufweisender Fasermatten bzw. Fasermattenanordnungen zur Herstellung eines Faserverbundkunststoffbauteils, insbesondere eines CFK-Bauteils, umfassend einen Auffädelabschnitt zur Aufnahme der eine Bohrung (24) aufweisenden Anschlusselemente, wobei der Auffädelabschnitt entlang seines Längsmittelachsenverlaufs einen sich vermindernden Außendurchmesser aufweist und zumindest bereichsweise stufenweise sich verjüngend ausgebildet ist.

9. Distanzelement nach Anspruch 8, **dadurch gekennzeichnet, dass** dieses hülsenförmig ausgebildet ist und/oder dass an dieses ein Verbindungsteil, insbesondere in Form einer Mutter oder eines Bolzens angeformt ist, der bevorzugt als Gewindebolzen (46) ausgebildet ist..

10. Distanzelement nach Anspruch 8 oder 9, **dadurch gekennzeichnet, dass** sich an den abgestuft ausgebildeten Auffädelabschnitt eine Scheibe (41) anschließt, die bevorzugt mit Verstärkungsfaserfäden oder Verstärkungsfaserbündeln, insbesondere Carbonfasern oder Carbonfaserbündeln versehen ist, die sich in Form von überstehenden Faserfäden nach außen erstrecken.

11. Verfahren zur Herstellung eines Faserverbundkunststoff-Bauteils, wobei zunächst die Faserfäden (3) und/oder Faserfadenbündel (31) wenigstens eines Anschlusselements, das eine Scheibe mit einem Außenrandbereich umfasst, der einen inneren Verbindungsbereich begrenzt, wobei der Außenrandbereich (21) mit Verstärkungsfasern versehen ist, die sich in Form von überstehenden Faserfäden (3) oder Faserfadenbündeln (31) nach außen erstrecken, in eine Fasermatte eingewebt oder zwischen zwei Fasermatten platziert werden, **dadurch gekennzeichnet, dass** anschließend die wenigstens eine Fasermatte bzw. das Fasermattenpaar mit den Faserfäden (3) und/oder den Faserfadenbündeln (31) des wenigstens einen Anschlusselements (1) in eine Kunststoffmatrix eingebettet wird und wobei in wenigstens zwei Fasermatten jeweils die Faserfäden (3) bzw. die Faserfadenbündel (31) wenigstens eines Anschlusselements (1) eingewebt oder zwischen wenigstens zwei Fasermattenpaaren die Faserfäden (3) bzw. die Faserfadenbündel (31) wenigstens eines Anschlusselements (1) platziert werden, wobei der Verbindungsbereich (23) der wenigstens zwei Anschlusselemente (1) eine Bohrung (24) aufweist, nachfolgend die Fasermatten bzw. die Fasermattenpaare derart übereinanderliegend angeordnet werden, dass die Bohrungen (24) der Anschlusselemente (1) zueinander fluchten, anschließend ein Distanzelement (4) durch die jeweils fluchtend zueinander angeordneten Bohrungen (24) der Anschlusselemente (1) geführt wird, wonach die so gebildete Anordnung in eine Kunststoffmatrix eingebettet wird, welches Distanzelement einen Auffädelabschnitt zur Aufnahme der eine Bohrung (24) aufweisenden Anschlusselemente (1) umfasst, wobei der Auffädelabschnitt entlang seines Längsmittelachsenverlaufs einen sich vermindernden Außendurchmesser aufweist.

12. Verfahren nach Anspruch 11, **dadurch gekennzeichnet, dass** der Verbindungsbereich des wenigstens einen Anschlusselements nicht in die Kunststoffmatrix eingebettet wird.

13. Verfahren nach Anspruch 11 oder 12, **dadurch gekennzeichnet, dass** das Distanzelement (4) nach Anspruch 10 ausgebildet ist, wobei die Scheibe (41) des Distanzelements (4) mit Verstärkungsfaserfäden oder Verstärkungsfaserbündeln versehen ist, die in eine Fasermatte eingewebt sind oder zwischen wenigstens zwei Fasermattenpaaren platziert werden.

## Claims

1. Fibre composite plastic component comprising a fibre mat arrangement (51) embedded in a plastic matrix, wherein at least one connection element (1) is arranged, which comprises a disc with an outer peripheral region, which delimits an inner connecting region, wherein the outer peripheral region (21) is provided with reinforcement fibres, which extend outward in the form of projecting fibre threads (3) or fibre thread bundles (31) and whose fibre threads (3) are arranged in at least one fibre mat and/or between two fibre mats, **characterised in that** at least two fibre mats, in which at least one connection element (1) is inserted, which comprises a disc with an outer peripheral region, which delimits an inner connecting region, wherein the outer peripheral region (21) is provided with reinforcement fibres, which extend outward in the form of projecting fibre threads (3) or fibre thread bundles (31), at a distance and/or two fibre mat arrangements (51) on top of one another are embedded in a plastic matrix, which fibre mats or fibre mat arrangements (51) each have at least one connection element (1), whose connecting region has a bore, wherein the bores (24) of the at least one connection element (1) of at least two fibre mats or fibre mat arrangements (51) are mutually aligned and wherein a spacer element (4) is guided through the mutually aligned bores (24) of the connection elements (1) of the fibre mats or the fibre mat arrangements (51) in such a manner that the connection element (1) of each fibre mat or fibre mat arrangement (51) rests on the outer surface of the spacer element (4) at a distance from one another, wherein the outer surface of the spacer element (4) is preferably at least partially conical and/or stepped.

2. Fibre composite plastic component according to claim 1, **characterised in that** the disc (2) is a metal disc.

3. Fibre composite plastic component according to claim 1 or 2, **characterised in that** the fibre threads (3) and/or fibre thread bundles (31) are guided through holes (22) inserted in the disc (2), which are preferably arranged peripherally spaced apart from the outer edge of the disc.

4. Fibre composite plastic component according to one of the previous claims, **characterised in that** the connecting region (23) of the disc (2) has a bore (24) or a connecting piece, which is preferably designed in the form of a bolt, a nut or a rivet piece.

5. Fibre composite plastic component according to one of the previous claims, **characterised in that** the fibre mats are designed as prepreg fibre mats.

6. Fibre composite plastic component according to one of the previous claims, **characterised in that** the connecting region (23) of the at least one connection element (1) is not embedded in the plastic matrix.

7. Fibre composite plastic component according to one of the previous claims, **characterised in that** the spacer element (4) is constructed in a sleeve-like form and/or that at the spacer element (4) a connecting piece, in particular in the form of a nut or a bolt, preferably of a threaded bolt (46) is arranged.

8. Spacer element for connecting several fibre mats or fibre mat arrangements, which are arranged at a distance on top of one another and have at least one connection element (1) provided with a bore (24) for the production of a fibre composite plastic component, in particular of a CRP component, comprising a threading portion for receiving the connection elements having a bore (24), wherein the threading portion has a decreasing outer diameter along its course of the longitudinal centre axis and is at least partially tapering in steps.

9. Spacer element according to claim 8, **characterised in that** it is sleeve-shaped and/or that a connection part, in particular in the form of a nut or a bolt is moulded on it, which is preferably designed as a threaded bolt (46).

10. Spacer element according to claim 8 or 9, **characterised in that** the stepped threading portion is followed by a disc (41), which is preferably provided with reinforcement fibre threads or reinforcement fibre bundles, in particular carbon fibres or carbon fibre bundles, which extend outward in the form of projecting fibre threads.

11. Method for producing a fibre composite plastic component, wherein first the fibre threads (3) and/or fibre thread bundles (31) of at least one connection element, which comprises a disc with an outer peripheral region, which delimits an inner connecting region, wherein the outer peripheral region (21) is provided with reinforcement fibres, which extend outward in the form of projecting fibre threads (3) or fibre thread bundles (31), are woven into a fibre mat or are placed between two fibre mats, **characterised in that** subsequently, the at least one fibre mat or the fibre mat pair is embedded with the fibre threads (3) and/or the fibre thread bundles (31) of the at least one connection element (1) in a plastic matrix and wherein the fibre threads (3) or the fibre thread bundles (31), respectively, of the at least one connection element (1) are woven into at least two fibre mats or the fibre threads (3) or the fibre thread bundles (31) of at least one connection element (1) are placed between at least two fibre mat pairs, wherein the connecting region (23) of the at least two connection elements (1) has a bore (24), subsequently, the fibre mats or the fibre mat pairs are arranged on top of one another in such a manner that the bores (24) of the connection elements (1) are aligned with one another, afterwards, a spacer element (4) is guided through the respectively mutually aligned bores (24) of the connection elements (1), whereafter the arrangement thus formed is embedded in a plastic matrix, which spacer element comprises a threading portion for receiving connection elements (1) having a bore (24), wherein the threading portion exhibits a decreasing outer diameter along its course of the longitudinal centre axis.

12. Method according to claim 11, **characterised in that** the connecting region of the at least one connection element is not embedded in the plastic matrix.

13. Method according to claim 11 or 12, **characterised in that** the spacer element (4) is designed according to claim 10, wherein the disc (41) of the spacer element (4) is provided with reinforcement fibre threads or reinforcement fibre bundles, which are woven into a fibre mat or are placed between at least two fibre mat pairs.

## Revendications

1. Composant en matière plastique à base de composite renforcé par des fibres, comprenant un agencement (51) de mats fibreux noyé dans une matrice de plastique, sachant qu'est disposé au moins un élément de raccordement (1) comprenant un disque avec une zone marginale externe limitant une zone de liaison interne, sachant que la zone marginale externe (21) est dotée de fibres renforts qui s'étendent vers l'extérieur sous la forme de fils en fibres (3) ou de faisceaux (31) de fils en fibres saillants et dont les fils (3) en fibres sont disposés dans au moins un mat fibreux et/ou entre deux mats fibreux, **caractérisé en ce que** sont disposés espacés au moins deux mats fibreux - dans lesquels est introduit au moins un élément de raccordement (1) comprenant un disque avec une zone marginale externe qui limite une zone de liaison interne, sachant que la zone marginale externe (21) est dotée de fibres renforts qui s'étendent vers l'extérieur sous forme de fils en fibres (3) ou de faisceaux (31) de fils en fibres saillants - et/ou que deux agencements (51) de mats fibreux sont superposés noyés dans une matrice de plastique, lesquels mats fibreux et/ou agencements (51) de mats fibreux présentent chacun au moins un élément de raccordement (1) dont la zone de liaison présente un perçage, sachant que les perçages (24) d'au moins un élément de raccordement (1) d'au moins deux mats fibreux et/ou agencements (51) de mats fibreux sont disposés alignés les uns sur les autres, et sachant qu'un élément d'écartement (4) est guidé de telle sorte par les perçages (24) - disposés alignés les uns sur les autres - des éléments de raccordement (1) des mats fibreux et/ou des agencements (51) de mats fibreux, que les éléments de raccordement (1) de chaque mat fibreux et/ou agencement (51) des mats fibreux reposent à distance les uns des autres sur la surface enveloppante externe de l'élément d'écartement (4), sachant que la surface enveloppante de l'élément d'écartement (4) est configurée de préférence, au moins localement, conique et/ou étagée.

2. Composant en matière plastique à base de composite renforcé par des fibres selon la revendication 1, **caractérisé en ce que** le disque (2) est un disque métallique.

3. Composant en matière plastique à base de composite renforcé par des fibres selon la revendication 1 ou 2, **caractérisé en ce que** les fils en fibres (3) et/ou les faisceaux (31) de fils en fibres sont introduits par les trous (22) ménagés dans le disque (2), trous qui sont disposés de préférence de manière circulaire à distance les uns des autres sur le bord extérieur du disque.

4. Composant en matière plastique à base de composite renforcé par des fibres selon l'une des revendications précédentes, **caractérisé en ce que** la zone de liaison (23) du disque (2) présente un perçage (24) ou une pièce de liaison configurée de préférence en forme de goujon, d'écrou ou de rivet.

5. Composant en matière plastique à base de composite renforcé par des fibres selon l'une des revendications précédentes, **caractérisé en ce que** les mats fibreux sont configurés en mats fibreux pré-imprégnés.

6. Composant en matière plastique à base de composite renforcé par des fibres selon l'une des revendications précédentes, **caractérisé en ce que** la zone de liaison (23) d'au moins un élément de raccordement (1) n'est pas noyée dans la matrice de plastique.

7. Composant en matière plastique à base de composite renforcé par des fibres selon l'une des revendications précédentes, **caractérisé en ce que** l'élément d'écartement (4) est configuré en forme de douille et/ou que contre l'élément d'écartement (4) est disposée une pièce de liaison notamment en forme d'écrou ou de goujon, de préférence de boulon fileté (46).

8. Élément d'écartement pour relier plusieurs mats fibreux et/ou agencements de mat fibreux - superposés horizontalement à distance les uns des autres - présentant au moins un élément de raccordement (1) doté d'un perçage (24), pour la fabrication d'un composant en matière plastique à base de composite renforcé par des fibres, notamment d'un composant en matière plastique renforcé par des fibres de carbone, comprenant un segment d'enfilage pour recevoir les éléments de raccordement présentant un perçage (24), sachant que le segment d'enfilage présente un diamètre externe qui va en s'amenuisant le long de son tracé axial longitudinal médian et qu'il est configuré, au moins localement, s'amincissant par gradins.

9. Élément d'écartement selon la revendication 8, **caractérisé en ce que** cet élément est configuré en forme de douille et/ou que contre ledit élément est modelé un élément de liaison, en particulier en forme d'écrou ou de goujon, lequel est configuré de préférence en forme de boulon fileté (46).

10. Élément d'écartement selon la revendication 8 ou 9, **caractérisé en ce qu'**un disque (41) rejoint le segment d'enfilage configuré étagé, disque qui est doté de préférence de fils en fibres renforts ou de faisceaux de fibres renforts, en particulier de fibres de carbone ou de faisceaux de fibres de carbone qui s'étendent vers l'extérieur sous forme de fils en fibres saillants.

11. Procédé de fabrication d'un composant en matière plastique à base de composite renforcé par des fibres, sachant que dans un premier temps les fils en fibres (3) et/ou les faisceaux (31) de fils en fibres - d'au moins un élément de raccordement, qui comprend un disque avec une zone marginale externe limitant une zone de liaison interne, sachant que la zone marginale externe (21) est dotée de fibres renforts qui s'étendent vers l'extérieur sous la forme de fils en fibres (3) ou de faisceaux (31) de fils en fibres saillants - sont tissés dans un mat fibreux ou placés entre deux mats fibreux, **caractérisé en ce qu'**ensuite au moins un mat fibreux et/ou la paire de mats fibreux est/sont noyé(e)(s) avec les fils en fibres (3) et/ou les faisceaux (31) de fils en fibres d'au moins un élément de raccordement (1) dans une matrice de plastique et sachant que dans au moins deux mats fibreux sont tissés respectivement les fils en fibres (3) et/ou les faisceaux (31) de fils en fibres d'au moins un élément de raccordement (1) ou qu'entre au moins deux paires de mats fibreux sont placés les fils en fibres (3) et/ou les faisceaux (31) de fils en fibres d'au moins un élément de raccordement (1), sachant que la zone de liaison (23) d'au moins deux éléments de raccordement (1) présente au moins un perçage (24), qu'ensuite les mats fibreux et/ou les paires de mats fibreux sont disposé(e)s superposé(e)s de sorte que les perçages (24) des éléments de raccordement (1) se trouvent en alignement réciproque, qu'ensuite un élément d'écartement (4) est guidé par les perçages (24), respectivement en alignement réciproque, des éléments de raccordement (1), ce après quoi l'agencement ainsi formé est noyé dans une matrice de plastique, lequel élément d'écartement comprend un segment d'enfilage pour recevoir les éléments de raccordement (1) présentant un perçage (24), sachant que le segment d'enfilage présente un diamètre externe qui va en s'amenuisant le long de son tracé axial longitudinal médian.

12. Procédé selon la revendication 11, **caractérisé en ce que** la zone de liaison d'au moins un élément de raccordement n'est pas noyée dans la matrice de plastique.

13. Procédé selon la revendication 11 ou 12, **caractérisé en ce que** l'élément d'écartement (4) est configuré selon la revendication 10, sachant que le disque (41) de l'élément d'écartement (4) est doté de fils en fibres renforts ou de faisceaux de fibres renforts qui sont tissés dans un mat fibreux ou qui sont placés entre au moins deux paires de mats fibreux.
